# EUROPÄISCHE PATENTSCHRIFT

(11) **EP 0 556 364 B1**
(45) Veröffentlichungstag und Bekanntmachung des Hinweises auf die Patenterteilung: **03.05.1995**
(21) Anmeldenummer: 92918308.5
(22) Anmeldetag: 31.08.1992
(51) Int. Cl.: B60N 2/22

(54) **GELENKBESCHLAG FÜR KRAFTFAHRZEUGSITZE**
HINGE FITTING FOR MOTOR VEHICLE SEATS
SYSTEME D'ARTICULATION POUR SIEGES DE VEHICULE AUTOMOBILE

(30) Priorität: 05.09.1991 DE 4129515; 22.11.1991 DE 4138420
(43) Veröffentlichungstag der Anmeldung: 25.08.1993
(73) Patentinhaber: P.A. Rentrop, Hubbert & Wagner Fahrzeugausstattungen GmbH & Co. KG, 31653 Stadthagen (DE)
(72) Erfinder: ERNST, Hans-Hellmut, D-2070 Ahrensburg (DE)
(74) Vertreter: Patentanwälte Dipl.-Ing. Bodo Thielking Dipl.-Ing. Otto Elbertzhagen
(86) Internationale Anmeldenummer: EP9202002
(87) Internationale Veröffentlichungsnummer: WO9304891

(56) Entgegenhaltungen:
- EP-A- 543 754
- EP-A- 0 099 549
- EP-A- 0 207 183
- DE-A- 2 724 637
- DE-A- 3 226 714
- DE-A- 4 032 603

## Beschreibung

### TECHNISCHES GEBIET

Die Erfindung betrifft einen Gelenkbeschlag für Kraftfahrzeugsitze nach dem Oberbegriff des Patentanspruchs 1.

### STAND DER TECHNIK

Bei Gelenkbeschlägen für Kraftfahrzeugsitze handelt es sich um Großserienteile, die in Stückzahlen von mehreren Millionen jährlich hergestellt werden. Die Montage erfolgt dabei heutzutage vollautomatisch mit einer hundertprozentigen Endkontrolle und läuft für eine optimale Auslastung der Maschinen und Montagevorrichtungen rund um die Uhr. Bei dieser gegebenen Situation muß bei Auslegung eines Gelenkbeschlages von Anfang an eine hohe Sicherheit angestrebt werden, daß die Montage leicht, schnell und vor allen Dingen störungsfrei vollautomatisch erfolgen kann. Diese hohe Sicherheit läßt sich relativ leicht durch das Vorsehen entsprechend großer Spiele bei der Fügung der Einzelteile realisieren. Bei einem Gelenkbeschlag für Kraftfahrzeugsitze sind hier jedoch enge Grenzen gesetzt, weil sich die Summe aller Spiele des Gelenkbeschlags als durchaus erhebliches und unangenehmes Spiel an der Oberkante der Lehne bemerkbar macht. Da die Forderung gestellt wird, das Lehnenspiel möglichst klein zu halten, ist der Konstrukteur des Gelenkbeschlags deshalb gezwungen, möglichst enge Toleranzen anzustreben. Hier ergibt sich also ein deutlicher Zielkonflikt mit der als Prozeßsicherheit bezeichneten Sicherheit bei der automatischen Fertigung von Großserienteilen.

Bei einem Gelenkbeschlag der als bekannt vorausgesetzten Art (DE 27 24 637) ist die Lagerung des Exzenters statisch überbestimmt. Die statisch überbestimmte Lagerung hat den Nachteil, daß eine einwandfreie Verstellung nur möglich ist, wenn die auf unterschiedlichen Seiten des Exzenters vorgesehenen Lagerbleche des Lehnenbeschlages so angeordnet sind, daß die Lagerbohrungen genau zueinander fluchten. Diese Bedingung läßt sich in der Großserienproduktion nicht im gewünschten Maß einhalten. Bei Fluchtungsfehlern stellt sich die Schwenkachse schief und es ergibt sich eine schwergängige Verstellung mit starken Komforteinschränkungen. Für eine praktische Realisierung dieser Konstruktion ist es erforderlich, die Lagerspiele in den beiden Lagerbohrungen entsprechend groß auszubilden. Dies gewährleistet zwar die gewünschte Leichtgängigkeit der Verstellung, hat jedoch den Nachteil, daß sich ein unerwünscht großes Lehnenspiel einstellen muß.

Es ist ferner ein anderer Gelenkbeschlag der als bekannt vorausgesetzten Art bekannt (DE 32 26 714 C2), bei dem der Exzenter statisch bestimmt gelagert ist. Es ist pro Gelenkteil nur eine Lagerstelle vorgesehen. Die Belastung der Lehne tendiert dazu, die beiden Gelenkteile gegeneinander zu verschränken. Die resultierenden Kräfte werden über die Lagerstellen auf die Schwenkachsenlagerbereiche des Exzenters übertragen. Dabei entsteht ein Moment, welches eine Schiefstellung der Achse verursacht. Diese Schiefstellung führt zu Verkantungen in den Lagerstellen und zu einer daraus resultierenden Schwergängigkeit bei der Verstellung. Dies Problem ist besonders dann gravierend, wenn die Lagerstellen durch Stahl-auf-Stahl-Lager mit Fettschmierung gebildet sind.

### DIE ERFINDUNG

Ausgehend von dem vorstehend genannten Stand der Technik liegt der Erfindung die Aufgabe zugrunde, einen Gelenkbeschlag der als bekannt vorausgesetzten Art so auszubilden, daß die Nachteile der bekannten einschlägigen Gelenkbeschläge vermieden werden. Es soll ein Gelenkbeschlag geschaffen werden, der leichtgängig auch dann ist, wenn die Toleranzen in den Lagerstellen vergleichsweise gering gehalten werden. Dabei soll es möglich sein, solche sehr engen Lagerlufttoleranzen mit vergleichsweise geringem Fertigungsaufwand einzuhalten und eine hohe Prozeßsicherheit bei der Fertigung der Einzelteile und der Montage zu erreichen.

Die Lösung dieser Aufgabe erfolgt mit den Merkmalen des Kennzeichnungsteils von Patentanspruch 1. In den Unteransprüchen sind zweckmäßige Weiterbildungen des Gelenkbeschlags beschrieben.

Die Ausbildung der Drehlager durch in die Gelenkteile eingesetzte Gleitlagerbuchsen und deren Anordnung sowie deren plastische Komprimierbarkeit haben erhebliche Vorteile:
Bereits der Einsatz von Gleitlagerbuchsen in Verbindung mit kostengünstig herstellbaren Blechstanzteilen ist besonders vorteilhaft. Die Anordnung der Gleitlagerbuchsen in der Weise, daß das größere Gleitlager das kleinere jeweils mit Abstand umschließt und eine gemeinsame Ebene durch die Gleitlagerbuchsen sowie durch die zusammenwirkenden Verzahungen verläuft, führt dazu, daß Verkantungen im Exzenterantrieb entfallen. Es ergibt sich ferner eine nur geringe axiale Baubreite und eine hohe innere Stabilität des Gelenkbeschlags auch gegen hohe Kräfte, die bei Unfällen einwirken können.

Die Gleitlager bzw. Gleitlagerbuchsen sind mittels eines Kalibrierdorns kalibrierbar. Dies führt einerseits zu den gewünschten sehr engen Lagertoleranzen bei einer gleichzeitig preisgünstigen Fertigung und andererseits zur Erreichung der angestrebten hohen Prozeßsicherheit.

Die Gleitlagerbuchsen können mit ungehärteten Gleitpartnern zusammenwirken. Durch den Verzicht auf eine Härtung werden aus Härteverzügen sich ergebende Fehler vollständig vermieden. Auch der Einsatz ungehärteter Einzelteile steigert die geforderte hohe Prozeßsicherheit.

Die üblichen eingesetzten Gleitlagerbuchsen bestehen aus einem vorzugsweise geschlitzten Stahlring, der etwa 90 % des Lagervolumens einnimmt. Auf diesen Stahlring ist eine Bronzeschicht mit etwa 9 % des Lagervolumens und darauf wiederum eine Gleitschicht von ca. 1 % aus PTFE (Polytetrafluorethylen) und Blei angebracht. Das nicht aus Stahl bestehende Volumen des Gleitlagers erlaubt eine Kalibrierbarkeit der Gleitlager in gewissen Grenzen. Nach Montage und Kalibrierung wird ein definierter Lagerdurchmesser mit einer Genauigkeit von wenigen tausendstel Millimetern gewährleistet. Wenn der Kalibrierdorn im vollautomatischen Montageprozeß durch das Lager gestoßen wurde, ist damit sichergestellt, daß ein fertigungsmäßig erforderliches Mindestmaß gewährleistet ist. Es läßt sich dann auch der Exzenter mit dem gewünschten Mindestlagerspiel montieren und besonders leicht drehen. Die Kalibrierbarkeit der Lager erlaubt im Fertigungsprozeß eine Genauigkeitssteigerung, die zur Spielverringerung und zur gleichzeitigen Steigerung der Prozeßsicherheit ausgenutzt werden kann.

Eine nachträgliche Genauigkeitssteigerung der Lagerstellen während des Montageprozesses ist im einschlägigen Stand der Technik für Gelenkbeschläge nicht bekannt. Vielmehr wird beim Stand der Technik die Genauigkeit der Lagerstellen bisher ausschließlich bestimmt durch die Genauigkeit der verwendeten Lager selbst und der zugehörigen Lageraufnahmen. Die Genauigkeit der kalibrierten Lagerstellen hat die Folge, daß das Betätigungsmoment des Beschlages geringer ist, als dies aus ergonomischen Gründen erforderlich wäre. Damit ergibt sich eine Reserve, die für ein künstlich zu schaffendes Bremsmoment mit Hilfe einer eingebauten Reibungsbremse genutzt werden kann.

Bevorzugte Ausgestaltungen der Erfindung sind in den Unteransprüchen und der nachfolgenden Zeichnungsbeschreibung erläutert.

### KURZBESCHREIBUNG DER ZEICHNUNGSABBILDUNG

In der Zeichnung zeigen:
- Figur 1 -: eine schematische, perspektivische Ansicht eines Kraftfahrzeugsitzes mit schematischer Darstellung eines Gelenkbeschlages,
- Figur 2 -: einen Querschnitt durch eine erste Ausführungsform eines Gelenkbeschlags,
- Figur 3 -: einen Querschnitt durch eine zweite Ausführungsform des Gelenkbeschlags,
- Figur 4 -: einen Querschnitt durch eine dritte Ausführungsform des Gelenkbeschlags,
- Figur 5 -: einen Querschnitt durch eine vierte Ausführungsform eines Gelenkbeschlages,
- Figur 6 -: Teilbereiche des ersten und zweiten Gelenkteils im Schnitt mit angedeuteten Kalibrierdornen,
- Figur 7 -: eine fünfte Ausführungsform in einer zu Figur 5 analogen Darstellung,
- Figur 8 -: Teilbereiche von zwei Gelenkteilen im Schnitt, mit zwei Kalibrierdornen, in einer Darstellung analog Figur 6,
- Figur 9 -: eine teilweise geschnittene alternative Ausführungsform eines Mitnehmers für den Exzenter gemäß Figur 7,
- Figur 10 -: eine weitere Ausführungsform eines Mitnehmers für einen elektrischen Antrieb,
- Figur 11 -: eine weitere Ausführungsform eines Mitnehmers, der wahlweise für einen elektrischen Antrieb bzw. für einen Handradantrieb ausgerüstet werden kann,
- Figur 12 -: eine Darstellung zweier Gelenkbeschläge, die am gleichen Sitz vorgesehen sind und über eine Verbindungsstange gemeinsam verdreht werden.

### BESTER WEG ZUR AUSFÜHRUNG DER EFINDUNG

In den unterschiedlichen Zeichnungsfiguren sind gleiche oder einander entsprechende Teile mit gleichen Bezugszeichen oder mit Bezugszeichen versehen, die sich durch die Zahl der Hochstriche voneinander unterscheiden bzw. eine um 100 höhere Ziffer aufweisen.

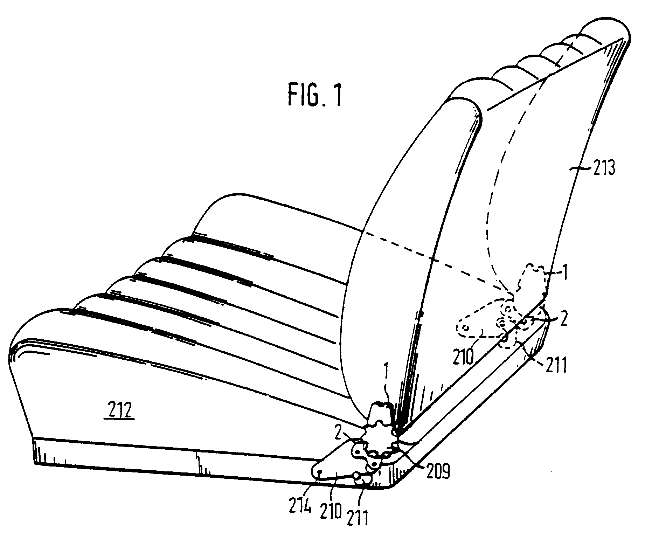

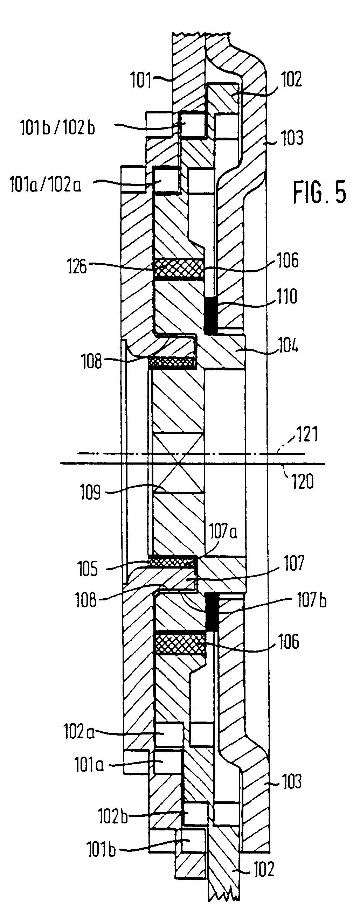

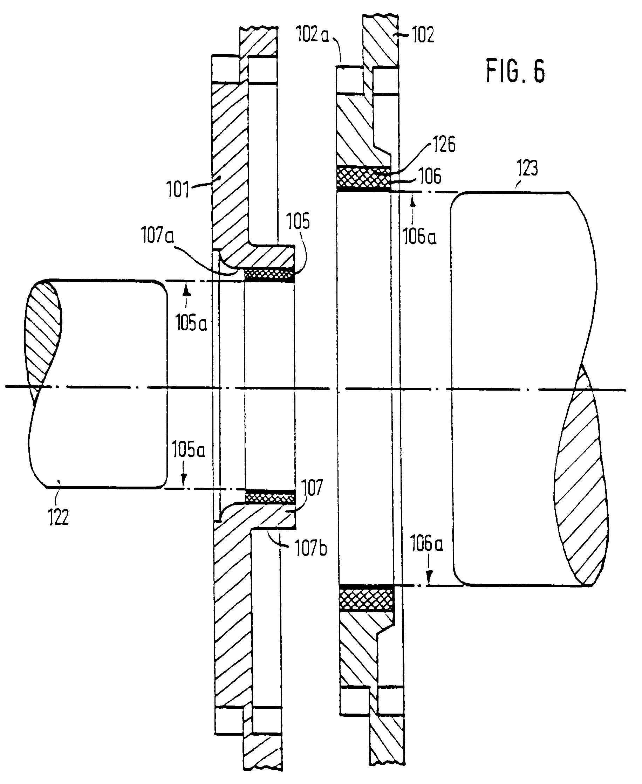

Bei den Ausführungsformen gemäß Figuren 1 bis 4 ist ein Gelenkteil 2 mit dem Sitzteil 212 des Kraftfahrzeugsitzes verbunden, während ein Gelenkteil 1 mit dem Lehnenteil 213 des Kraftfahrzeugsitzes verbunden ist. Bei den Ausführungsformen gemäß Figuren 5 bis 12 ist das mit dem Sitz fest verbundene Gelenkteil mit 102 bezeichnet und das mit der Rückenlehne 213 verbundene Gelenkteil mit 101. Der sitzfeste Gelenkteil 2 bzw. 102 ist fest an einem Beschlagteil 210 befestigt, der zum Vorklappen der Rückenlehne 213 um die Schwenkachse 214 verschwenkbar ist. Die Verriegelung der Rückenlehne 213 erfolgt mit Hilfe einer Klinke 211.

Das Handrad 209 dient zum Verdrehen des Exzenters.

Der maßgebliche Aufbau des Gelenkbeschlags ist genauer aus den verschiedenen Schnittzeichnungen ersichtlich.

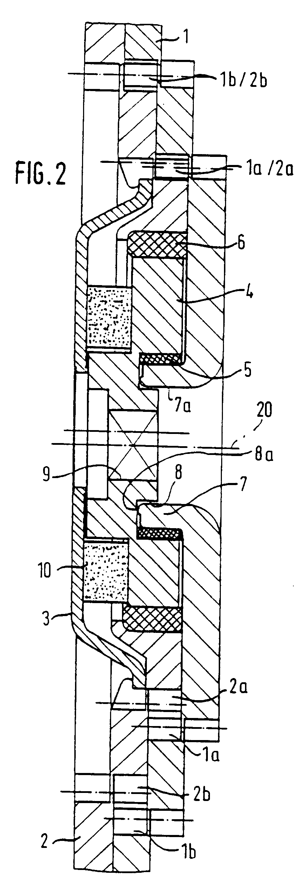

Zunächst zur Ausführungsform gemäß Figuren 2 bis 4:
Beide Gelenkteile 1 und 2 besitzen jeweils zwei Verzahnungen, die jeweils gestaffelt angeordnet sind. Das Gelenkteil 1 besitzt die gestaffelten Zahnreihen 1a und 1b, wobei die Zahnreihe 1a einen kleineren Teilkreisdurchmesser als die Zahnreihe 1b aufweist. Das Gelenkteil 2 besitzt entsprechende gestaffelte Verzahnungen mit unterschiedlichen Teilkreisdurchmessern, die mit den Bezugszeichen 2a und 2b bezeichnet sind.

In den dargestellten Ausführungsbeispielen 2 bis 4 sind die Zahnreihen 1a und 1b im oberen Bereich im Eingriff mit den Zahnreihen 2a und 2b, während sie im unteren Bereich außer Eingriff sind. Die in Wirkverbindung stehenden Zahnreihen bilden den verzahnten Teil eines Taumelgetriebes, das bei Gelenkbeschlägen für Kraftfahrzeugsitze bekannt ist.

Das Gelenkteil 1 besitzt einen Durchzug 7 mit einer Durchzugsbohrung 7a. Auf dem Außenrand des Durchzugs 7 ist eine Gleitlagerbuchse 5 vorgesehen, welche konzentrisch zur Durchzugsbohrung 7a und zur Drehachse 20 verläuft.

Auf der Gleitlagerbuchse 5 ist ein Exzenter 4 drehbar gelagert, dessen Verdrehung über einen zentralen Vierkant mittels einer nicht dargestellten Antriebswelle erfolgt.

Der Exzenter 4 seinerseits liegt mit seiner äußeren Exzenterfläche ringsum an einer Gleitlagerbuchse 6 an, die im Gelenkteil 2 befestigt ist. Die Gleitlagerbuchsen 5 und 6 sind exzentrisch zueinander versetzt. Die Anordnung der Gleitlagerbuchsen 5 und 6 ist so gewählt, daß sowohl die Gleitlagerbuchsen als auch die Zahnreihen 1a bzw. 1b im Bereich einer gemeinsamen, senkrecht zur Drehachse 20 verlaufenden Ebene liegen.

Am Gelenkteil 2 ist ein als Anschlagelement dienendes, topfartiges Sicherungsblech 3 befestigt. Zwischen der nach innen weisenden ebenen Seite des Sicherungsblechs 3 und einem gegenüberliegenden, parallel verlaufenden abgesetzten Bereich des Exzenters 4 ist eine Bremsscheibe 10 angeordnet. Der Exzenter 4 wird in Achsrichtung gegen die umlaufende Rippe 7b des Durchzugs 7 gedrückt, und zwar durch die Bremsscheibe 10. Bei einem Verdrehen der Gelenkteile zueinander, die über den Antrieb des Exzenters 4 erfolgt, wirken die ebenen Stirnseiten der Bremsscheibe 10.

Der Exzenter 4 besitzt einen wellenförmigen Bereich 8a, der mit Spiel in der Durchzugsbohrung 7a geführt ist. Diese Konstruktion baut sehr flach.

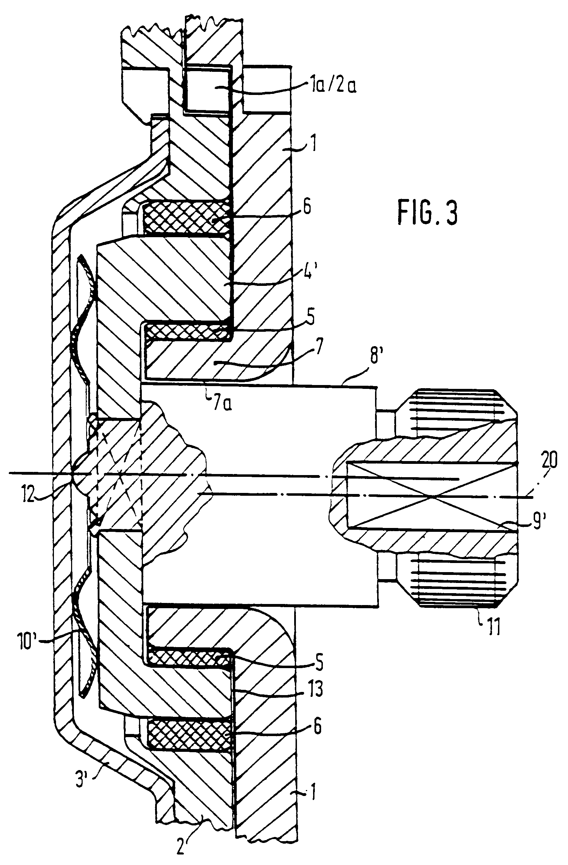

Bei der Ausführungsform gemäß Figur 3 ist der grundsätzliche Aufbau von Gelenkteilen 1 und 2, Zahnreihen 1a und 2a, Gleitlagerbuchsen 5 und 6 praktisch gleich wie bei der ersten Ausführungsform. Unterschiedlich ist in erster Linie die Ausbildung des Exzenters 4', der einen wellenartigen Bereich 8a aufweist. Am Ende dieses wellenartigen Bereichs 8a ist eine Verzahnung 11 vorgesehen, ferner ein Innenvierkant 9'. Der Antrieb des wellenartigen Bereichs 8' kann über Antriebsmotor oder von Hand erfolgen.

Der wellenartige Bereich 8' ist in der Durchzugsbohrung 7a gelagert. Der wellenartige Bereich 8' ist über einen Vierkant formschlüssig mit dem Exzenterbereich 4' verbunden. Der Exzenterbereich 4' läuft mit seiner Außenfläche im Gleitlager 6 und mit seiner Innenfläche im Gleitlager 5. An seiner Stirnseite besitzt der wellenartige Bereich 8' des Exzenters einen balligen Vorsprung 12, der an dem topfartigen Sicherungsblech 3', das mit dem Gelenkteil 2 fest verbunden ist, anliegt. Zwischen der zum Sicherungsblech 3' weisenden Stirnseite des Exzenters 4' und der Innenseite des Sicherungsblechs 3' ist eine wellenförmige Scheibe 10' vorgesehen, welche als Bremsscheibe dient. Die Bremsscheibe 10' drückt die Stirnseite 13 des Exzenters 4' gegen das Gelenkteil 1.

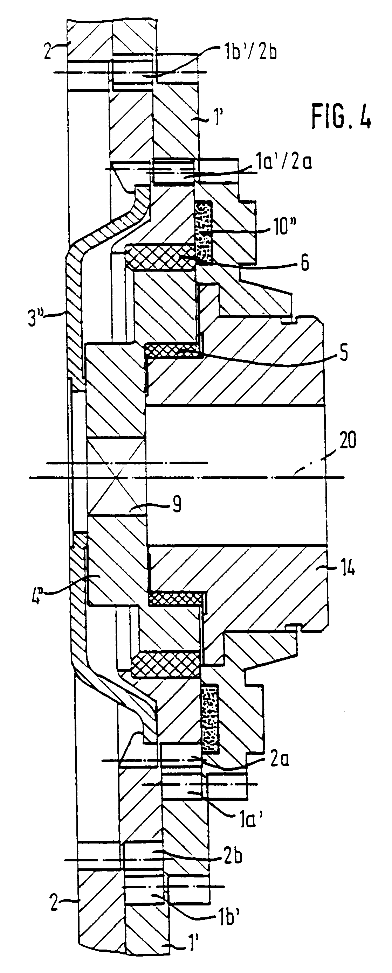

Die Ausführungsform gemäß Figur 4 entspricht im wesentlichen der Ausführungsform gemäß Figur 2. Unterschiedlich sind vor allen Dingen die Ausbildung des Exzenters, die Ausbildung des Gelenkteils 1' und die Anordnung der Bremsschreibe 10''.

Das Gelenkteil 1' besitzt einen festen Nabenbereich 14. Auf einem zur Drehachse 20 konzentrischen Gleitlager 5 ist der Exzenter 4'' innen gelagert. Der exzentrische Außenbereich des Exzenters 4'' läuft im Gleitlager 6, das im Gelenkteil 2 befestigt ist.

Ein mit dem Gelenkteil 2 festes Sicherungsblech 3'' drückt den Exzenter 4'' mit seiner Stirnseite in Richtung auf die Bremsscheibe 10''. Der Antrieb des Exzenters erfolgt in gleicher Weise wie bei der Ausführungsform gemäß Figur 2 über einen Innenvierkant 9 im Exzenter 4''.

Zu den Figuren 5 bis 12:
Der Gelenkbeschlag weist zwei Gelenkteile 101 und 102 auf. Das Gelenkteil 102 ist mit dem feststehenden Sitzteil des Kraftfahrzeugsitzes verbunden, während das Gelenkteil 101 mit der schwenkbaren Rückenlehne des Kraftfahrzeugsitzes fest verbunden ist.

Beide Gelenkteile besitzen jeweils zwei Verzahnungen, die jeweils gestaffelt angeordnet sind. Das Gelenkteil 101 besitzt die gestaffelten Zahnreihen 101a und 101b, wobei die Zahnreihe 101a einen kleineren Teilkreisdurchmesser als die Zahnreihe 101b aufweist. Das Gelenkteil 102 besitzt entsprechende gestaffelte Verzahnungen mit unterschiedlichen Teilkreisdurchmessern, die mit den Bezugszeichen 102a und 102b bezeichnet sind.

In den dargestellten Ausführungsbeispielen sind die Zahnreihen 101a und 101b im oberen Bereich im Eingriff mit den Zahnreihen 102a und 102b, während sie im unteren Bereich außer Eingriff sind. Die in Wirkverbindung stehenden Zahnreihen bilden einen Teil eines Taumelgetriebes, wie dies bei Gelenkbeschlägen für Kraftfahrzeugsitze bekannt ist.

Das Gelenkteil 101 besitzt einen Kragen oder Durchzug 107 mit einer Durchzugsbohrung 107a. In die Durchzugsbohrung 107a ist eine Gleitlagerbuchse 105 eingesetzt, welche konzentrisch zur Durchzugsbohrung 107a und zur Drehachse 120 des beweglichen Gelenkteils 101 verläuft. Der Kragen 107 besitzt einen Außendurchmesser 107b.

In der Gleitlagerbuchse 105 ist ein im wesentlichen scheibenförmig ausgebildeter Exzenter 104 drehbar gelagert. Die Verdrehung des Exzenters erfolgt über eine zentrale Vierkantbohrung 109 mittels einer nicht dargestellten Antriebswelle. Der Exzenter 104 seinerseits liegt mit seiner äußeren Exzenterfläche ringsum in einer Gleitlagerbuchse 106, die in einer Mittenbohrung 126 des Gelenkteils 102 sitzt. Die Gleitlagerbuchsen 105 und 106 sind exzentrisch zueinander versetzt. Die Anordnung der Gleitlagerbuchsen 105 und 106 ist so gewählt, daß sowohl die Gleitlagerbuchsen als auch die Zahnreihen 1a bzw. 1b im Bereich einer gemeinsamen, senkrecht zur Drehachse 20 verlaufenden Ebene liegen.

Mit 121 ist die Achse der Mittenbohrung 126 bzw. der Gleitlagerbuchse 106 bezeichnet.

Am Gelenkteil 101 ist ein Lagerschild 103 befestigt. Zwischen der ebenen Innenfläche des Lagerschilds 103 und dem gegenüberliegenden ebenen Bereich des Exzenters 104 ist eine ringförmige Bremsscheibe 110 angeordnet.

Mit 108 ist ein zylindrischer Bereich des Exzenters 104 bezeichnet, der den Außendurchmesser des Kragens 107 mit geringem Spiel umgibt. Die Mittelachse des zylindrischen Bereichs 108 fällt mit der Drehachse 120 zusammen.

In der Zeichnungsfigur 6 sind die beiden Gelenkteile 101 und 102 einzeln dargestellt, wobei Kalibrierdorne 122 und 123 gezeigt sind. Die Gleitlagerbuchse 6 wird in die Mittenbohrung 125 des Gelenkteils 102 eingesetzt und anschließend mit dem Kalibrierdorn 123 kalibriert. Entsprechend erfolgt die Kalibrierung der kleinen Gleitlagerbuchse 105, die zunächst in die Durchzugsbohrung 7a eingesetzt wird, bevor sie vom Kalibrierdorn 122 kalibriert wird. Es existieren Montagevorrichtungen, bei denen das Einsetzen und anschließende Kalibrieren der Gleitlagerbuchsen 105 und 106 in einem einzigen Arbeitsgang erfolgt.

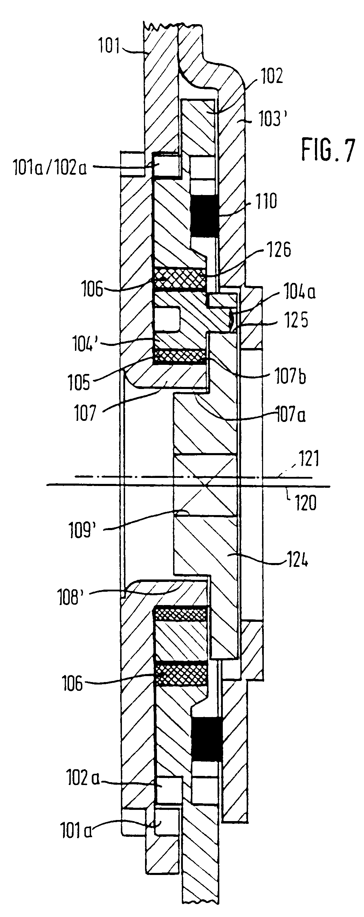

Bei der Ausführungsform gemäß Figur 7 weisen die Beschlagteile jeweils nur eine Zahnreihe auf und der Exzenter 104' ist hier ringförmig ausgebildet. Die Gegenlauffläche für die kleine Gleitlagerbuchse 105 ist hier der Außendurchmesser 107b des Kragens 107. Der ringförmige Exzenter 104' kann als Feinstanz- oder als Sinterteil hergestellt werden. Er weist Mitnehmerzapfen 104a auf, die in entsprechende Bohrungen 125 eines Mitnehmers 124 eingreifen. Der Antrieb erfolgt hier über eine nicht dargestellte Verbindungsstange über den Vierkant 109' im Mitnehmer 124.

Die Zeichnungsfigur 8 zeigt den Exzenterring 104' mit zugehörigem Kalibrierdorn 122' und den Gelenkteil 102 mit eingesetztem Gleitlager 106 und vorgesehenem Kalibrierdorn 123. Mit dem Kalibrierdorn 122' wird ein kalibrierter Lagerdurchmesser 105a erzeugt, mit dem Kalibrierdorn 123 ein kalibrierter Lagerdurchmesser 106a des Gleitlagers 106.

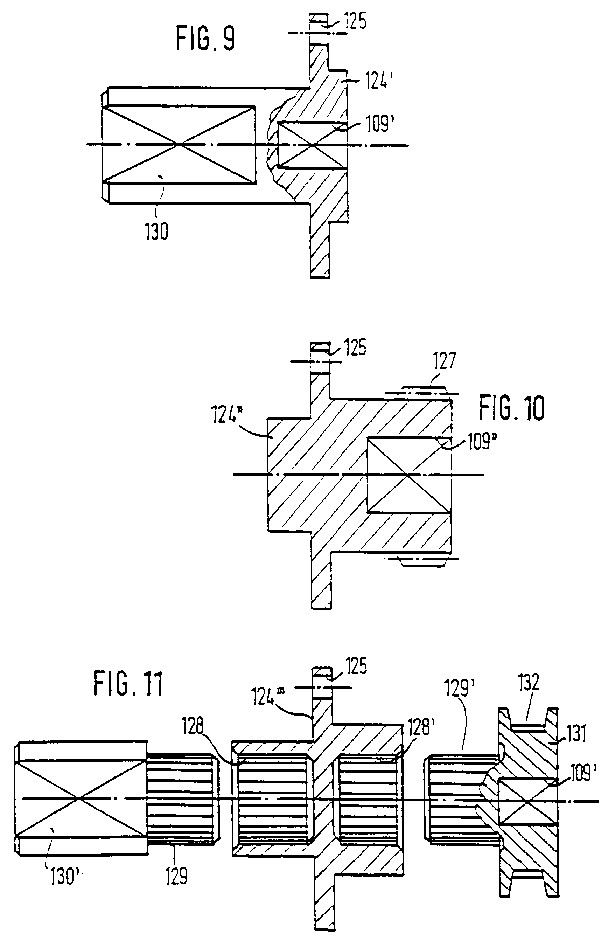

Die Figuren 9 bis 11 zeigen unterschiedliche Ausgestaltungen von Mitnehmern 124', 124'' und 124''', die mit dem Exzenterring 104' zusammenwirken.

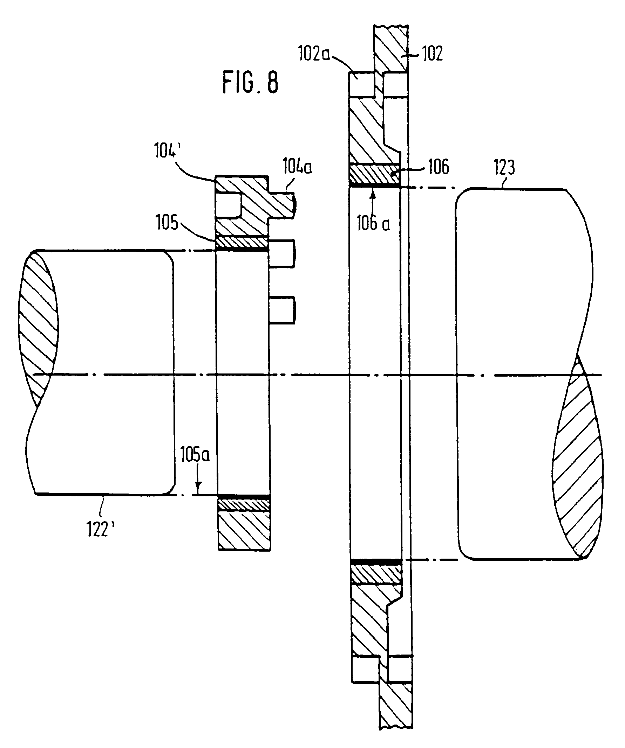

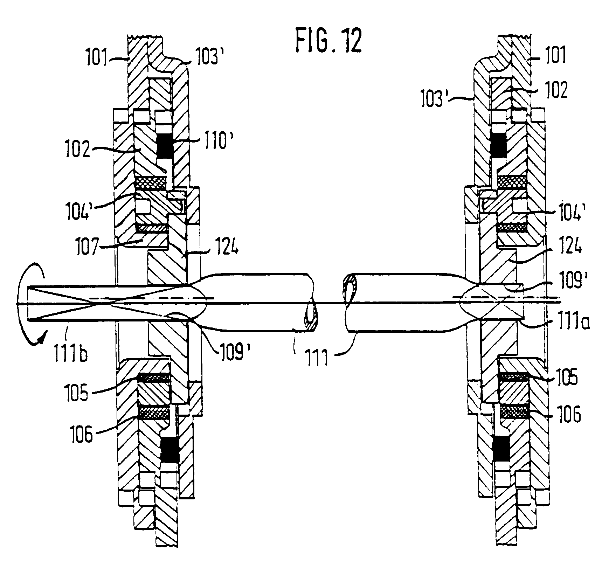

Der Mitnehmer in seinen unterschiedlichen Ausgestaltungen kann beispielsweise als Zinkdruckgußteil oder sogar als Kunststoffteil sehr variabel ausgeführt werden. Bei der Ausführungsform gemäß Figur 9 ist ein Mitnehmer 124' gezeigt, der innen die Vierkantbohrung 109' zur Aufnahme einer Verbindungsstange 111 (vgl. Figur 8) aufweist. Ferner besitzt er eine Abflachung 130 zur Verbindung mit einem Handrad. Der korrespondierende Beschlag auf der anderen Seite der Rückenlehne besitzt lediglich den einfachen Mitnehmer 124, wie dies aus Figur 12 ersichtlich ist.

Figur 10 zeigt einen Mitnehmer 124'', der für einen elektrischen Antrieb eine Verzahnung 127 aufweist, in die ein Ritzel eines Getriebemotors eingreifen kann. Darüber hinaus ist eine Innenvierkantbohrung 109' zur Aufnahme einer Verbindungsstange 111 vorgesehen.

Bei der Ausführungsform gemäß Figur 11 ist ein Mitnehmer 124''' dargestellt, der unterschiedlich zusammengesetzt werden kann. Er hat beidseitig Aufnahmebohrungen mit einem Vielkeilprofil 128 und 128'. Darin können unterschiedliche Bauteile eingepreßt oder in anderer Weise befestigt werden, beispielsweise verclipst. So ist beispielsweise auf der linken Seite ein Handradhalter 130' mit einem Vielkeilprofilzapfen 29 dargestellt und rechts eine Zahnriemennabe 131 mit einem Zahnprofil 132. Über das Zahnprofil 132 kann mittels eines Zahnriemens der Antrieb über ein versetzt angeordnetes Handrad erfolgen.

Die Ausführung gemäß Figur 11 erlaubt, daß der Beschlag mit dem integrierten Mitnehmer 124''' nach der Montage für die unterschiedlichsten Kundenanforderungen ausgerüstet werden kann. Es genügt die Fertigung eines einzigen Standardbeschlages.

In Figur 12 schließlich sind eine rechte und eine linke Ausführung eines Beschlages dargestellt. Jeder der nicht dargestellten Rückenlehnenholme ist mit dem beweglichen Gelenkteil 101 eines Beschlages verbunden. Eine Verbindungsstange 111 sitzt in den Vierkantbohrungen 109 der Exzenter 104 bzw. in den Vierkantbohrungen 109' des Mitnehmers 124. Der linke Vierkant 111b ist länger ausgeführt, so daß daran das Handrad für die Verstellung angebracht werden kann. Über die Verbindungsstange 111 ist sichergestellt, daß der Verstellvorgang in beiden Beschlägen jeweils synchron abläuft und damit die Lehne völlig gleichmäßig verschwenkt werden kann.

## Patentansprüche

1. Gelenkbeschlag für Kraftfahrzeugsitze mit verstellbarer Lehne, bei dem ein dem Sitz zugeordneter fester Gelenkteil und ein der Lehne zugeordneter schwenkbarer Gelenkteil über einen Exzenter verbunden sind und beide Gelenkteile miteinander im Eingriff stehende, Teile eines Taumelgetriebes bildende Verzahnungen aufweisen, wobei der Exzenter um eine erste Schwenkachse in einem ersten Drehlager gegenüber einem Gelenkteil und um eine zweite Schwenkachse in einem zweiten Drehlager gegenüber dem anderen Gelenkteil verschwenkbar ist und beide Drehlager exzentrisch zueinander angeordnet sind,
dadurch gekennzeichnet,
daß die Drehlager durch in die Gelenkteile (1; 2; 101; 102) und/oder den Exzenter (4; 4'; 4'') eingesetzte Gleitlagerbuchsen (6; 5; 106; 105) gebildet werden, deren Laufflächen den jeweils geringsten Abstand von der zugehörigen Achse des die jeweilige Gleitlagerbuchse aufnehmenden Gelenkbeschlagteils enthalten, wobei die Gleitlagerbuchsen für eine Kalibrierung mittels Kalibrierdorn plastisch komprimierbar sind.

2. Gelenkbeschlag nach Anspruch 1,
dadurch gekennzeichnet,
daß ca. 10 % des Volumens der Gleitlagerbuchsen (6; 5; 106; 105) plastisch komprimierbar ist.

3. Gelenkbeschlag nach Anspruch 1 oder 2,
dadurch gekennzeichnet,
daß eine gemeinsame Ebene durch die Gleitlagerbuchsen (6; 5; 106; 105) und die zusammenwirkenden Verzahnungen (1a/2a; 101a/102a) verläuft.

4. Gelenkbeschlag nach einem oder mehreren der Ansprüche 1 bis 3,
dadurch gekennzeichnet,
daß die innere Gleitlagerbuchse (5; 105) innerhalb eines Kragens (7; 107) einer Durchzugsbohrung (7a; 107a) des einen Gelenkteils (1; 101) sitzt.

5. Gelenkbeschlag nach einem oder mehreren der Ansprüche 1 bis 4,
dadurch gekennzeichnet,
daß die Laufflächen der Gleitlagerbuchsen (6; 5; 106; 105) mit ungehärteten Gleitlagerflächen der Gelenkteile (2; 1) zusammenwirken.

6. Gelenkbeschlag nach einem oder mehreren der Ansprüche 1 bis 5,
dadurch gekennzeichnet,
daß eine Reibungsbremse (10; 110) in den Gelenkbeschlag integriert ist.

7. Gelenkbeschlag nach Anspruch 6,
dadurch gekennzeichnet,
daß die Reibungsbremse (10; 110) eine Scheibenbremse ist.

8. Gelenkbeschlag nach einem oder mehreren der Ansprüche 1 bis 7,
dadurch gekennzeichnet,
daß die Reibungsbremse (10; 110; 10'') einerseits an einem Gelenkteil (2; 102) und andererseits an dem anderen Gelenkteil (1') bzw. an einem mit dem anderen Gelenkteil (1; 101) fest verbundenen Bereich (3; 3'; 103) anliegt.

9. Gelenkbeschlag nach einem oder mehreren der Ansprüche 1 bis 7,
dadurch gekennzeichnet,
daß die Reibungsbremse (10; 10'; 110) einerseits an einem Gelenkteil bzw. mit einem Gelenkteil (2; 102) fest verbundenen Bereich (3; 3'; 103) anliegt und andererseits an dem Exzenter (4; 4'; 104).

10. Gelenkbeschlag nach einem oder mehreren der Ansprüche 1 bis 9,
dadurch gekennzeichnet,
daß der Außendurchmesser des Exzenters (4; 104) auf der Lauffläche der äußeren Gleitlagerbuchse (6; 106) abläuft und daß ein weiterer, im Innenbereich des Exzenters (4; 104) gebildeter Außendurchmesser auf der Lauffläche der inneren Gleitlagerbuchse (15; 105) abläuft.

11. Gelenkbeschlag nach einem oder mehreren der Ansprüche 1 bis 10,
dadurch gekennzeichnet,
daß an dem Exzenter (4; 4' 104) ein zylindrischer Bereich (8; 8' 108) vorgesehen ist, dessen Mittelachse mit der Schwenkachse (20, 120) zusammenfällt und der mit geringem Spiel in eine Durchgangsbohrung (7a; 107a) des den zylindrischen Bereich (8; 8' 108) umgreifenden Gelenkteils (1) eingreift.

## Claims

1. Articulated fitment for vehicle seats with adjustable backrest, wherein a fixed articulated part associated with the seat and a swivel articulated part associated with the backrest are connected by an eccentric and both articulated parts have gearings forming interengaging parts of a tumbler gear, wherein the eccentric can swivel about a first swivel axis in a first rotary bearing opposite one articulated part and about a second swivel axis in a second rotary bearing opposite the other articulated part, and both rotary bearings are mounted eccentric relative to each other
characterised in that
the rotary bearings are formed by slide bearing bushes (6; 5; 106; 105) inserted in the articulated parts (1; 2; 101; 102) and/or the eccentrics (4; 4';4'') wherein the track faces of the bushes each have the smallest distance from the associated axis of the articulated fitment part holding the relevant slide bearing bush wherein the slide bearing bushes can be plastically compressed for calibration by means of a calibrating pin.

2. Articulated fitment according to claim 1
characterised in that about 10% of the volume of the slide bearing bushes (6; 5; 106; 105) can be plastically compressed.

3. Articulated fitment according to claim 1 or 2
characterised in that a common plane runs through the slide bearing bushes (6; 5; 106; 105) and the interacting gearings (1a/2a; 101a/102a).

4. Articulated fitment according to one or more of claims 1 to 3
characterised in that the inner slide bearing bush (5; 105) is seated inside a collar (7; 107) of a through bore (7a; 107a) of the one articulated part (1; 101).

5. Articulated fitment according to one or more of claims 1 to 4
characterised in that the track faces of the slide bearing bushes (6; 5; 106; 105) interact with non-hardened slide bearing faces of the articulated parts (2 ; 1).

6. Articulated fitment according to one or more of claims 1 to 5
characterised in that a friction brake (10; 110) is integrated in the articulated fitment.

7. Articulated fitment according to claim 6
characterised in that the friction brake (10; 110) is a disc brake.

8. Articulated fitment according to one or more of claims 1 to 7
characterised in that the friction brake (10; 110; 10'') on one side adjoins one articulated part (2; 102) and on the other side the other articulated part (1') or an area (3; 3'; 103) fixedly connected to the other articulated part (1; 101).

9. Articulated fitment according to one or more of claims 1 to 7
characterised in that the friction brake (10; 10';110) on one side adjoins one articulated part or an area fixedly connected to one articulated part (2; 102), and on the other side the eccentric (4; 4'; 104).

10. Articulated fitment according to one or more of claims 1 to 9
characterised in that the outer diameter of the eccentric (4; 104) runs on the track face of the outer slide bearing bush (6; 106) and that a further outer diameter formed in the inner area of the eccentric (4; 104) runs on the track face of the inner slide bearing bush (15; 105).

11. Articulated fitment according to one or more of claims 1 to 10
characterised in that on the eccentric (4; 4'; 104) there is a cylindrical area (8; 8'; 108) whose centre axis coincides with the swivel axis (20, 120) and which engages with slight play in a through bore (7a; 107a) of the articulated part (1) engaging round the cylindrical area (8; 8'; 108).

## Revendications

1. Système d'articulation pour siège de véhicule automobile avec dossier réglable, dans lequel une pièce d'articulation fixe, coordonnée au siège, et une pièce d'ar ticulation pivotante, coordonnée au dossier, sont reliées par l'intermédiaire d'un excentrique et présentent des dentures qui, en prise mutuelle, forment une partie d'un mécanisme oscillant, l'excentrique étant pivotable autour d'une premier pivot, dans un premier coussinet de pivotement, par rapport à une pièce d'articulation et, autour d'un deuxième pivot, dans un deuxième coussinet de pivotement, par rapport à l'autre pièce d'articulation et les deux coussinets de pivotement étant disposés excentriquement par rapport l'un à l'autre,
caractérisé en ce que
les coussinets de pivotement sont des coussinets lisses (6; 5; 106; 105), placés dans les pièces d'articulation (1; 2; 101; 102) et/ou l'excentrique (4; 4'; 4''), leurs surfaces de glissement étant à l'intervalle le plus faible de l'axe afférent de la pièce d'articulation respective et les coussinets lisse étant plastiquement comprimables pour le calibrage à l'aide d'un outil adéquat.

2. Système d'articulation selon la revendication 1,
caractérisé en ce que
10% env. du volume des coussinets lisses (6; 5; 106; 105) est plastiquement comprimable.

3. Système d'articulation selon la revendication 1 ou 2,
caractérisé en ce que
un plan commun traverse les coussinets lisses 6; 5; 106; 105) et les dentures concourantes (1a/2a; 101a/102a).

4. Système d'articulation selon l'une ou plusieurs des revendications 1 à 3,
caractérisé en ce que
le coussinet lisse intérieur (5; 105) est logé à l'intérieur d'un col (7; 107) d'une forure de passage (7a; 107a) de l'une des pièces d'articulation (1; 101).

5. Système d'articulation selon l'une ou plusieurs des revendications 1 à 4,
caractérisé en ce que
les surfaces de glissement de s coussinets lisses (6; 5; 106; 105) concourent avec des surfaces de coussinets lisses non durcies des pièces d'articulation (2; 1).

6. Système d'articulation selon l'une ou plusieurs des revendications 1 à 5,
caractérisé en ce que
un frein à friction (10; 110) est intégré dans le système d'articulation.

7. Système d'articulation selon la revendication 6,
caractérisé en ce que
le frein à friction (10; 110) est un frein à disque.

8. Système d'articulation selon l'une ou plusieurs des revendications 1 à 7,
caractérisé en ce que
le frein à friction (10; 110; 10'') porte, d'une part, sur une pièce d'articulation (2; 102) et, d'autre part, sur l'autre pièce d'articulation (1') resp. sur une zone (3; 3'; 103) reliée fixement à l'autre pièce d'articulation (1; 101).

9. Système d'articulation selon l'une ou plusieurs des revendications 1 à 7,
caractérisé en ce que
le frein à friction (10; 10'; 110) porte, d'une part, sur l'une des pièces d'articulation resp. sur une zone (3; 3'; 103) reliée fixement à une pièce d'articulation (2; 102) et, d'autre part, sur l'excentrique (4; 4'; 104).

10. Système d'articulation selon l'une ou plusieurs des revendications 1 à 9,
caractérisé en ce que
le diamètre extérieur de l'excentrique (4; 104) glisse sur la surface de roulement du coussinet lisse extérieur (6; 106) et qu'un autre diamètre extérieur, formé dans la zone intérieure de l'excentrique (4; 104) glisse sur la surface de roulement du coussinet lisse intérieur (15; 105).

11. Système d'articulation selon l'une ou plusieurs des revendications 1 à 10,
caractérisé en ce que
l'excentrique (4; 4'; 104) est pourvu d'une zone cylindrique (8; 8'; 108) dont l'axe central coïncide avec l'axe de pivotement (20; 120) et qui s'engage, avec un faible jeu, dans une forure de passage (7a; 107a) de la pièce d'articulation (1) qui embrasse la zone cylindrique (8; 8'; 108).
